Europäisches Patentamt

**European Patent Office**

**Office européen des brevets**

(19)

(11) Publication number: **0 017 321**
**B1**

(12) **EUROPEAN PATENT SPECIFICATION**

(45) Date of publication of patent specification: **21.04.82**

(51) Int. Cl.³: **F 02 N 15/04, F 16 D 11/00**

(21) Application number: **80300438.1**

(22) Date of filing: **15.02.80**

(54) Starter motor.

(30) Priority: **03.04.79 GB 7911644**

(43) Date of publication of application:
**15.10.80 Bulletin 80/21**

(45) Publication of the grant of the patent:
**21.04.82 Bulletin 82/16**

(84) Designated Contracting States:
**DE FR GB IT**

(56) References cited:
**DE - C - 411 074**
**FR - A - 698 171**
**FR - A - 717 511**
**FR - A - 1 079 635**

(73) Proprietor: **LUCAS INDUSTRIES LIMITED**
**Great King Street**
**Birmingham, B19 2XF (GB)**

(72) Inventor: **Bottoms, Harry Simister**
**Riverside Beaudesert Lane**
**Henley in Arden West Midlands (GB)**

(74) Representative: **Carpenter, David et al,**
**MARKS & CLERK Alpha Tower ATV Centre**
**Birmingham B1 1TT (GB)**

Courier Press, Leamington Spa, England.

Starter motor

This invention relates to a starter motor, for use on an internal combustion engine, the starter motor being of the kind including an electric motor having a rotor shaft, a lay-shaft carrying a pinion gear wheel, the lay-shaft being spaced from the rotor shaft and being driven thereby, and means whereby the lay-shaft can be moved transverse to its longitudinal axis relative to the rotor shaft to move the pinion gear wheel into and out of driving engagement with the ring gear of an engine.

Starter motors of the kind specified have been known for some years and although not widely used such motors have found applications in small capacity engines such for example as motor cycle engines. A problem found with starter motors of the kind specified is that of controlling the depth of meshing between the pinion gear wheel and the engine ring gear. Gear teeth on meshing gears are designed to engage at a predetermined region of the tooth profile, for example in the region of the pitch circle diameter of the teeth. In a known starter motor the depth of meshing is controlled by abutment of a stop member on the frame of the starter motor with a part of the means for moving the lay-shaft. Such a mode of controlling meshing depth can prove unsatisfactory inter alia in that inaccuracies can arise as a result of tolerance build up in the assembly of the starter motor relative to the engine ring gear and as a result of wear. It is an object of the present invention to produce a starter motor of the kind specified wherein the aforementioned disadvantages are minimised.

According to the invention in a starter motor of the kind specified there is provided, adjacent the pinion gear wheel, a circular cylindrical surface which is coaxial with the pinion gear wheel and has a diameter equal to the pitch circle diameter of the pinion gear wheel said surface in use during operation of the starter motor abutting a corresponding circular cylindrical surface adjacent the ring gear, said corresponding surface being coaxial with the ring gear and being of diameter equal to the pitch circle diameter of the ring gear.

Desirably the surface is a surface of a part integral with the pinion gear wheel.

The invention further resides in an internal combustion engine incorporating a starter motor as specified in anyone of the two preceding paragraphs, and having a ring gear and adjacent the ring gear a circular cylindrical surface coaxial with the ring gear and of a diameter equal to the pitch circle diameter of the ring gear.

Conveniently said surface is a surface of a part integral with the ring gear.

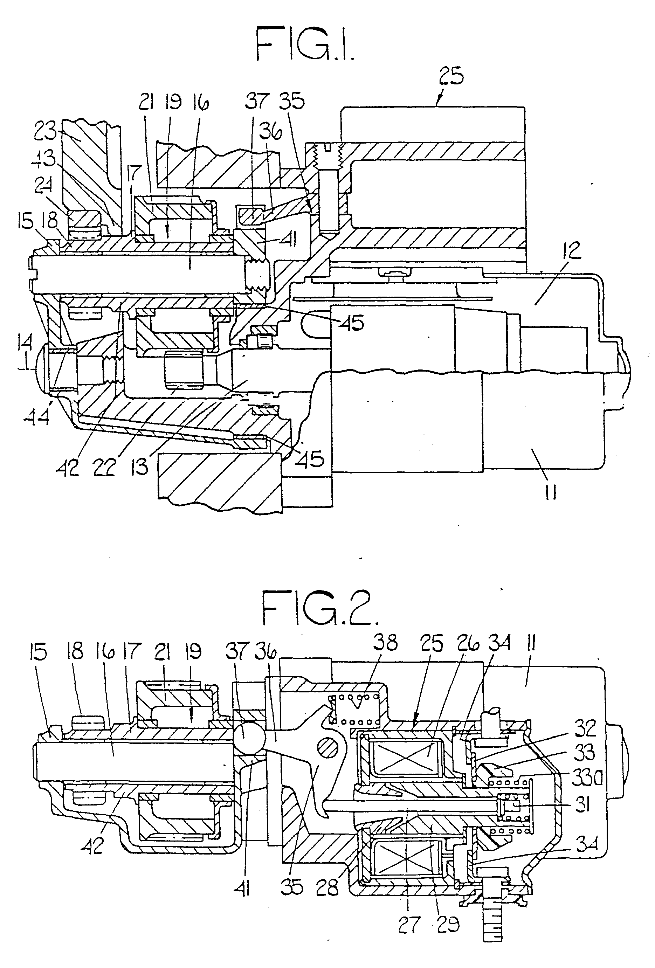

One example of the invention is illustrated in the accompanying drawings wherein Figure 1 is a diagrammatic part sectional view of a starter motor;

Figure 2 is a view similar to Figure 1, with the section taken in a plane at right angles to the section of Figure 1, and

Figure 3 is a diagrammatic end view of the starter motor shown in Figure 1.

Referring to the drawings, the starter motor includes a body 11 housing an electric motor 12 including a motor shaft 13. Pivotally mounted on the body 11 by way of bearings 44 and 45, for movement about an axis co-incident with the axis 14 of the rotor shaft 13 is a lay-shaft carrier 15 the lay-shaft carrier 15 supporting a lay-shaft 16 having its axis parallel to and spaced from the axis 14. Rotatable on the lay-shaft 16 is a drive sleeve 17 the end of which furthest from the motor 12 is shaped to define a pinion gear wheel 18.

At its end remote from the pinion gear wheel 18 the sleeve 17 supports a uni-directional clutch assembly 19 the outer, drive input member 21 of which is cylindrical having its axis coincident with the axis of the shaft 16 and which is formed on its outer surface with gear teeth. The gear teeth of the member 21 are permanently in mesh with gear teeth of a gear wheel 22 carried at the free end of the rotor shaft 13. Thus when the motor 12 is energised the shaft 13 rotates and the gear wheel 22 drives the outer, drive input member 21 of the uni-directional clutch 19. The clutch 19 is so arranged that it transmits the normal rotational movement of the shaft 13 to the sleeve 17 so that the pinion gear wheel 18 is caused to rotate. Clearly the pinion gear wheel 18 rotates in the opposite direction to the shaft 13, and at a speed determined by the rotational speed of the shaft 13 and the effective gear ratio of the gear wheel 22 and the outer member of the clutch 19. In the event that the sleeve 17 is rotated in the same direction as it will be driven by the shaft 13, but at a speed greater than that with which it will be driven by the shaft 13, then the clutch 19 over-runs so that the sleeve 17 cannot drive the motor 12.

In use the starter motor is positioned with the axis 14 parallel to the axis of rotation of the flywheel of the engine. It will be recognised that it is normal for a starter motor to drive an internal combustion engine for starting purposes, by having its output pinion gear wheel in mesh with a ring gear on the flywheel of the engine. The pinion gear wheel 18 is normally held clear of the ring gear 24 of the flywheel 23, but can be moved tranverse to its rotational axis in an arcuate path about the axis 14 by movement of the carrier 15 about the axis 14, to engage the pinion gear wheel 18/with the ring gear 24.

An electromagnetic arrangement 25 is supported on the body 11 of the starter motor, and is provided for the purpose of moving the carrier 15, lay-shaft 16 and sleeve 18 about the axis 14 to engage the pinion gear wheel 18 with the ring gear 24 in use. The electromagnet is positioned with its axis parallel to the axis 14 and comprises a toroidal electromagnet winding 26 having a push rod 27 extending along the axis thereof. Adjacent the end of the winding 26 is a fixed electromagnet pole 28 through which the rod 27 extends. Slidable towards and away from the pole 28 within the winding 26 is an electromagnet armature 29 which is coupled to the rod 27 by means of a compression spring 31 whereby the armature 29 can move relative to the winding 26 even if the rod 27 is held against movement. A movable electrical contact 32 is supported on an electrically insulated carrier 33 in turn supported on the electromagnet armature 29. The contact 32 is engageable with a pair of fixed contacts 34 to complete an electrical circuit therebetween.

The end of the push rod 27 remote from the armature 29 co-operates with one limb of a bell-crank lever 35 the other limb 36 of which terminates in a part-spherical member 37. The bell-crank lever 35 is pivotally mounted on the body 11 and is urged by a compression spring 38 to pivot relative to the body 11 in a direction to move the armature 29 away from the pole 28 (counter-clockwise in Figure 2).

The part-spherical member 37 of the limb 36 is received in a yoke 41 secured to the lay-shaft 16. Thus when the bell-crank lever 35 is caused to pivot relative to the body 11 the co-operation between the member 37 and the yoke 41 causes movement of the lay-shaft assembly including the carrier 15 about the axis 14. The spring 38 acting on the bell-crank lever 35 urges the lay-shaft assembly to pivot relative to the body 11 in a direction to withdraw the pinion gear wheel 18 radially from the ring gear 24.

It is to be recognised that the accompanying drawings all show the starter motor in an operated condition, that is to say with the pinion gear wheel 18 in meshing engagement with the ring gear 24.

Intermediate the pinion gear 18 and the clutch 19 the sleeve 17 is formed with a region 42 having a circular cylindrical outer surface the axis of which is coincident with the axis of the pinion gear wheel 18. The diameter of the cylindrical surface of the region 42 is equal to the pitch circle diameter of the teeth of the pinion gear wheel 18. The fly-wheel 23 is provided adjacent the ring gear 24, with a region 43 having a circular cylindrical outer surface the axis of which is coincident with the axis of the ring gear 24. The diameter of the cylindrical surface of the region 43 is equal to the pitch circle diameter of the gear teeth of the ring gear 24, and the region 43 is positioned axially with respect to the ring gear 24 so as to be aligned with the region 42 on the sleeve 17. It will be recognised therefore, that when the lay-shaft assembly of the starter motor is moved relative to the body 11 about the axis 14 to move the pinion gear wheel 18 into engagement with the ring gear 24 then the depth by which the teeth of the pinion gear wheel 18 and the teeth of the ring gear 24 mesh is limited by abutment of the cylindrical surface of the region 42 with the cylindrical surface of the region 43. Since the diameters of the surface of the regions 42 and 43 are equal to the pitch circle diameter of their respective sets of gear teeth then the meshing of the ring gear 24 with the pinion gear wheel 18 will take place with their pitch circles "touching" this being the ideal meshing arrangement for the form of gear teeth used on the pinion gear wheel 18 and the ring gear 24.

The operation of the starter motor is as follows. Assuming that the starter motor is at rest, then the pinion gear wheel 18 will be spaced radially from the ring gear 24. When the driver of the vehicle attempts to start the vehicle closure of the starter switch will energise the electromagnet winding 26 but not the electric motor 12. The armature 29 will be attracted magnetically towards the pole 28 and thus will move axially (to the left in Figure 2) taking the push rod 27 with it. The push rod 27 will thus cause the bell-crank lever 35 to pivot against the action of the spring 38 (clockwise in Figure 2) and the co-operation between the member 37 and the yoke 41 will pivot the lay-shaft assembly about the axis 14 to bring the pinion gear wheel 18 into engagement with the ring gear 24. Assuming that the teeth of the pinion gear wheel 18 and the ring gear 24 mesh cleanly then fractionally before the surface of the region 42 abuts the surface of the region 43 the moving contact 32 (moving with the armature 29) will engage and bridge the fixed contacts 34 thereby completing the energising circuit of the electric motor 12. The armature 29 will continue to move, and the gear wheel 18 will be moved into full meshing engagement with the ring gear 24, at which point its movement will be arrested by abutment of the surface of the region 42 with the surface of the region 43. During this later movement of the armature 29 the armature 29 will move relative to the contact 32 and contact carrier 33 as permitted by collapse of a compression spring 33a. Thus this additional movement of the armature 29 ensures that the contact 32 is firmly urged, by the compression spring 33a, into engagement with the contact 34.

In the event that the teeth of the pinion gear wheel 18 meet the teeth of the ring gear 24 in tooth-to-tooth abutment then the pivoting movement of the lay-shaft assembly will be arrested, thus arresting movement of the bell-crank lever 35 and the push rod 27. However, the armature 29 will continue to move as permitted by compression of the spring 31 which links the armature 29 to the push rod 27. Thus a position of the armature 29 where the contact 32 bridges the contact 34 will still be reached, and the motor will be energised. Initial rotation of the rotor shaft 13 and therefore the pinion gear wheel 18 will immediately disturb the tooth-to-tooth relationship, permitting the teeth of the pinion gear wheel 18 and ring gear 24 to mesh. The lay-shaft assembly will rapidly be moved about the axis 14 to achieve full meshing immediately the tooth-to-tooth condition is broken by the combined action of the spring 31 and the driving torque of the now driven pinion gear wheel engaging the substantially stationary ring gear which effectively pulls the pinion gear wheel into mesh with the ring gear. It will be recognised therefore that the force generated by the electromagnet must be sufficient to overcome the combined action of the springs 31, 33a, 38. Furthermore, it will be recognised that the spring 31 must be of greater strength than the spring 38 so that normally the spring 31 acts as a solid spacer and is only compressed in the event of a tooth-to-tooth abutment condition.

When the pinion gear wheel 18 and ring gear 24 are fully meshed, and the motor 12 is operating then the motor will drive the engine by way of the flywheel 23. This operation is known as "cranking". Immediately the engine fires, it is probable that the flywheel 23 will be driving the pinion 18 at a speed greater than that which it is being driven by the motor 12 and the clutch 19 will then over-run so that the engine does not drive the electric motor 12.

When the driver of the vehicle releases the starter switch, the starter switch will return to its open condition thus de-energising the electromagnetic winding 26. The restoring action of the spring 38 will thus return the lay-shaft assembly, the bell-crank lever 35, and rod 27 and the armature 29 to their original rest positions during which movement the movable contact 32 will be disengaged from the fixed contacts 34 thus de-energising the motor 12.

It will be recognised that the sleeve 17 is formed from hardened and tempered material, since the teeth of the pinion gear wheel 18 are integral therewith. Thus it is convenient to form the region 42 integral with the pinion gear wheel. However, in the example described above and illustrated in the drawings the ring gear 24 is an annulus of hardened and tempered material secured to the periphery of the flywheel 23 whereas the region 43 is integral with the flywheel 23. In some applications, for example where the flywheel 23 is formed from a relatively soft material (perhaps in order to achieve a relatively light-weight flywheel) then it may be preferable to provide the region 43 as an integral part of the hardened metal annulus forming the ring gear 24. Conversely, in some circumstances it may be preferable to provide the ring gear 24 and the region 43 as integral parts of the flywheel 23.

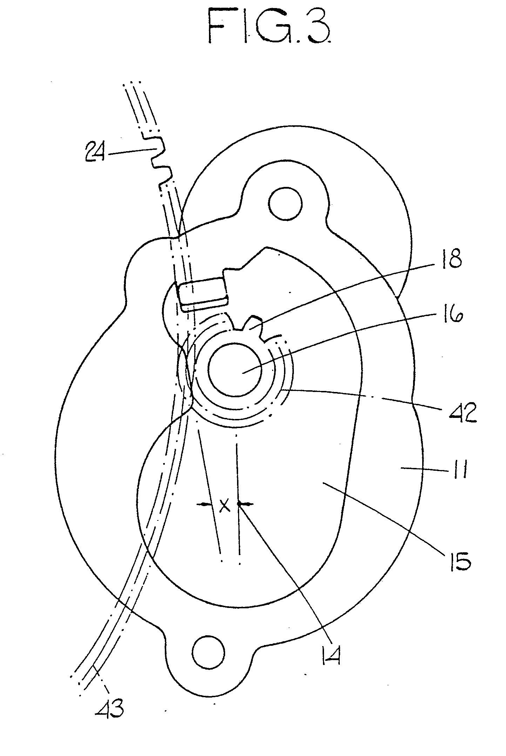

It is known that when two gear wheels mesh and are rotating then a force is generated tending to part the gear wheels. In order to overcome this problem the line of action of the gear wheels is arranged to pass the axis 14 at a spacing X (Figure 3) such that a torque is generated to impress upon the carrier 15 a load greater than the parting load so tending to keep the gear wheels in mesh. This load is accepted by the surfaces 42, 43 which, being of the pitch circle diameter of their respective gear wheels will have no speed difference and therefore no slippage at their interface. It is the torque generated by the spacing X of the line of action of the gear wheels from the axis 14 which aids the spring 31 in causing the pinion gear wheel to mesh with the ring gear immediately a tooth-to-tooth abutment condition has been removed.

It will be recognised that if desired the electromagnet arrangement 25 could have its axis at right angles to the axis 14 with the armature 2a acting directly on the carrier 41, the bell crank lever 35 being dispensed with.

**Claims**

1. A starter motor, for use in an internal combustion engine, including an electric motor (12) having a rotor shaft (13), a lay-shaft (16) carrying a pinion gear wheel (18), the lay-shaft (16) being spaced from the rotor shaft (13) and being driven thereby, and means whereby the lay-shaft can be moved transverse to its longitudinal axis relative to the rotor shaft to move the pinion gear wheel (18) into and out of driving engagement with the ring gear (24) of an engine, in use, characterised in that there is provided, adjacent the pinion gear wheel (18), a circular cylindrical surface which is coaxial with the pinion gear wheel (18) and has a diameter equal to the pitch circle diameter of the pinion gear wheel (18) said surface in use during operation of the starter motor abutting a corresponding circular cylindrical surface adjacent the ring gear (24), said corresponding surface being coaxial with the ring gear (24) and being of diameter equal to the pitch circle diameter of the ring gear (24).

2. A starter motor as claimed in claim 1, characterised in that said surface adjacent the pinion gear wheel (18) is a surface of a part (42) integral with the pinion gear wheel (18).

3. An internal combustion engine characterised by incorporating a starter motor as claimed in either of claim 1 or claim 2, and having a ring gear (24) and adjacent the ring gear (24) a circular cylindrical surface coaxial with the ring gear (24) and of a diameter equal to the pitch circle diameter of the ring gear (24).

4. An internal combustion engine as claimed in Claim 3, characterised in that said surface is a surface of a part (43) integral with the ring gear (24).

5. An internal combustion engine as claimed in Claim 3 or Claim 4, wherein the ring gear (24) and the pinion gear wheel (18) are so arranged that when in mesh their line of action is spaced from the axis (14) about which the lay shaft (16) moves relative to the ring gear (24) such that in operation a torque is generated tending to move the pinion gear wheel (18) towards the axis of rotation of the ring gear (24).

## Revendications

1. Démarreur destiné à être utilisé dans un moteur à combustion interne, comprenant un moteur électrique (12) qui possède un arbre de rotor (13), un arbre intermédiaire (16) portant une roue dentée-pignon (18), l'arbre intermédiaire (16) étant espacé de l'arbre (13) du rotor et étant entraîné par ce dernier, et des moyens sous l'effet desquels l'arbre intermédiair peut être déplacé transversalement à son axe longitudinal par rapport à l'arbre du rotor de façon à mettre la roue dentée-pignon (18) en prise et hors de prise avec la couronne dentée (24) d'un moteur, en utilisation, caractérisé en ce qu'il est prévu, dans la région adjacente à la roue dentée-pignon (18), une surface cylindrique circulaire qui est coaxiale à la roue dentée-pignon (18) et possède un diamètre égal au diamètre du cercle primitif de la roue dentée-pignon (18), cette surface butant, en utilisation, pendant le fonctionnement du démarreur, sur une surface cylindrique circulaire correspondante adjacente à la couronne (24), ladite surface correspondante étant coaxiale à la couronne dentée (24) et étant de diamètre égal au diamètre du cercle primitif de la couronne dentée (24).

2. Démarreur suivant la revendication 1, caractérisé en ce que ladite surface adjacente à la roue dentée-pignon (18) est une surface d'un élément (42) qui fait corps avec la roue dentée-pignon (18).

3. Moteur à combustion interne caractérisé en ce qu'il comprend un démarreur suivant la revendication 1 ou 2 et ayant une couronne dentée (24) et, dans la région adjacente à cette couronne dentée (24), une surface cylindrique circulaire coaxiale à la couronne dentée (24) et d'un diamètre égal au diamètre du cercle primitif de la couronne dentée (24).

4. Moteur à combustion interne suivant la revendication 3, caractérisé en ce que ladite surface est une surface d'un élément (43) qui fait corps avec la couronne dentée (24).

5. Moteur à combustion interne suivant la revendication 3 ou la revendication 4, dans lequel la couronne dentée (24) et la roue dentée-pignon (18) sont agencées de manière que, lorsqu'elles sont en prise, leur ligne d'action soit espacée de l'axe (14) autour duquel l'arbre secondaire (16) se déplace par rapport à la couronne dentée (24) d'une distance telle qu'en fonctionnement il s'engendre un couple tendant à déplacer la roue dentée-pignon (18) vers l'axe de rotation de la couronne dentée (24).

## Patentansprüche

1. Anlasser für eine Brennkraftmaschine, mit einem Elektromotor (12) einschliesslich einer Rotorwelle (13), wobei eine Vorgelegewelle (16) ein Ritzel (18) trägt, das von der Rotorwelle (13) im Abstand angeordnet ist und hierdurch angetrieben wird, und mit einer Einrichtung, durch die die Vorgelegewelle quer zu ihrer Längsachse gegenüber der Rotorwelle bewegt werden kann zur Bewegung des Ritzels (18) in und ausser antreibenden Eingriff mit dem Ringzahnrad (24) einer Brennkraftmaschine bei Gebrauch, dadurch gekennzeichnet, dass angrenzend an das Ritzel (18) eine kreiszylindrische Fläche vorgesehen ist, die koaxial zum Ritzel (18) und deren Durchmesser gleich dem Teilkreisdurchmesser des Ritzerls (18) ist, wobei die Fläche bei Gebrauch während des Betriebs des Anlassers an einer entsprechenden kreiszylindrischen und an das Ringzahnrad (24) angrenzenden Fläche anliegt, wobei die entsprechende Fläche koaxial zum Ringzahnrad (24) und ihr Durchmesser gleich dem Teilkreisdurchmesser des Ringzahnrads (24) ist.

2. Anlasser nach Anspruch 1, dadurch gekennzeichnet, dass die an das Ritzel (18) angrenzende Fläche eine Fläche eines Teils (42) ist, das einstückig mit dem Ritzel (18) ausgebildet ist.

3. Brennkraftmaschine, gekennzeichnet durch Einbau eines Anlassers nach Anspruch 1 oder 2 und durch ein Ringzahnrad (24) sowie eine an das Ringzahnrad (24) angrenzende kreiszylindrische Fläche, die koaxial zum Ringzahnrad (24) und deren Durchmesser gleich dem Teilkreisdurchmesser des Ringzahnrads (24) ist.

4. Brennkraftmaschine nach Anspruch 3, dadurch gekennzeichnet, dass die Fläche eine Fläche eines mit dem Ringzahnrad (24) einstückig ausgebildeten Teils (43) ist.

5. Brennkraftmaschine nach Anspruch 3 oder 4, dadurch gekennzeichnet, dass das Ringzahnrad (24) und das Ritzel (18) so angeordnet sind, dass bei ihrem Eingriff ihre Wirkungslinie von der Achse (14) beabstandet ist, um die sich die Vorgelegewelle (16) gegenüber dem Ringzahnrad (24) dreht, so dass beim Betrieb ein Drehmoment erzeugt wird, das bestrebt ist, das Ritzel (18) zur Drehachse des Ringzahnrads (24) zu bewegen.

# FIG.1.

# FIG.2.

1

# FIG.3